# EUROPEAN PATENT APPLICATION

(11) **EP 1 422 253 A1**
(43) Date of publication of application: **26.05.2004**
(21) Application number: 02760701.9
(22) Date of filing: 22.08.2002
(51) Int. Cl.: C08F 297/02

(54) **BLOCK COPOLYMER, PROCESS FOR PRODUCING THE SAME, AND MOLDED OBJECT**

(30) Priority: 22.08.2001 JP 2001252158
(71) Applicant: Zeon Corporation, Tokyo 100-8323 (JP)
(72) Inventor: SONE, Atsushi Research & Deveropment Center, Kawasaki-shi, Kanagawa 210-9507 (JP)
(74) Representative: VOSSIUS & PARTNER
(86) International application number: PCT/JP2002/008463
(87) International publication number: WO 2003/018656

(57) **Abstract**

A block copolymer having a polymer block [A] including two or more specific repeating units [1] and a polymer block [B] including one or more specific repeating unit [2] and/or repeating unit [3], and when a polymer block having heaviest weight average molecular weight is a polymer block [A1], the weight average molecular weight of the polymer block [A1] is Mw (A1) and a polymer block having the lightest weight average molecular weight is a polymer block [B], and the weight average molecular weight of the polymer block [A2] is Mw (A2) in the polymer block [A], having the ratio (Mw (A1) / Mw (A2)) of the Mw (A1) and Mw (A2) of 1.5 or more is provided according to the present invention, and the block copolymer has excellent fluidity at the time of molding and mechanical strength at the time of punching processing.

## Description

### TECHNICAL FIELD

The present invention relates to a block copolymer, a process for producing the same, and a molded object.

### BACKGOUND ART

It is known that an aromatic vinyl based polymer hydride obtained by hydrogenating an aromatic ring of polystyrene or other aromatic vinyl based copolymers, and aromatic vinyl based copolymer hydrides obtained by hydrogenating a copolymer of an aromatic vinyl compound and a vinyl compound are optical materials having excellent low birefringence and can be used as an optical lens and optical disk.

However, an aromatic vinyl polymer hydride is highly elastic but fragile, so that it has a disadvantage of being liable to be broken at the time of being released from a mold when molding a thin molded object by performing injection molding.

On the other hand, it is known that when using as a polystyrene block a block copolymer hydride obtained by hydrogenating unsaturated bond of aromatic ring and aliphatic chain of a block copolymer wherein polybutadiene block and polyisoprene block, etc. are bonded, it is hard to release from a mold even if a thin molded object is molded by injection molding (for example, refer to the Japanese Unexamined Patent Publication No. 1-294721 and No. 1-318015).

However, to obtain a thinner and larger plate molded object than existing ones by using such a conventional block copolymer hydride as such, molecular weight has to be light as such in terms of fluidity and processability at the time of molding. When using a block copolymer hydride having light molecular weight, there are some cases of breaking when releasing from a mold and arising breakings and cracks when obtaining molded objects by punching a sheet for mass production.

### DISCLOSURE OF THE INVENTION

An object of the present invention is to provide a block copolymer having excellent fluidity when molding and mechanical strength when subjected to punching processing, a process for producing the block copolymer, and a molded object obtained by molding the block copolymer.

Present inventors found the fact that a block copolymer having two or more copolymer blocks [A] including a repeating unit originating from vinyl cycloalkane and one or more copolymer blocks [B] including a repeating unit originating from a vinyl monomer, wherein a rate of weight average molecular weight of the two copolymer blocks [A] is a specific value or larger, does not exhibit a decline of strength even when the molecular weight is made relatively light and has excellent fluidity at the time of molding and strength at the time of punching, etc., and completed the present invention.

Namely, according to the present invention, there is provided a block copolymer comprising
a polymer block [A] including two or more repeating units [1] expressed by the formula (1) below and
a polymer block [B] including one or more repeating unit [2] expressed by the formula (2) below and/or a repeating unit [3] expressed by the formula (3) below,
characterized in that, when a polymer block having the heaviest weight average molecular weight is a polymer block [A1], the weight average molecular weight of the polymer block [A1] is Mw (A1), a polymer block having the lightest weight average molecular weight is a polymer block [A2], and the weight average molecular weight of the polymer block [A2] is Mw (A2) in the polymer block [A], the ratio (Mw (A1) / Mw (A2)) of the Mw (A1) and Mw
(A2) is 1.5 or more (preferably, 1.7 or more). 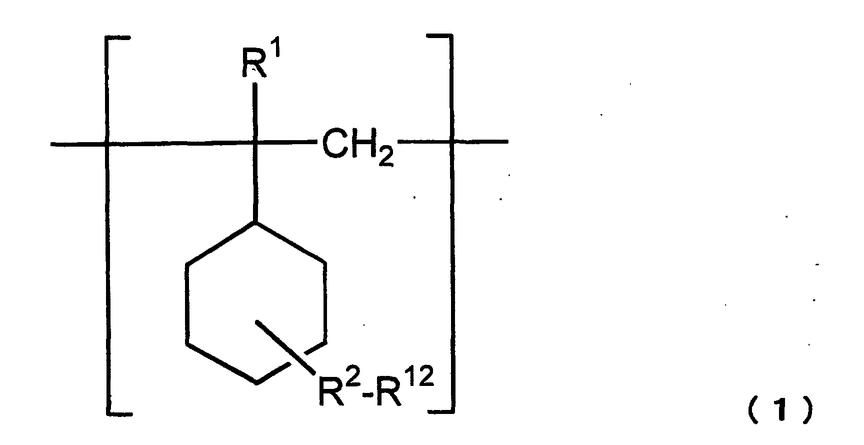 (In the formula (1), R¹ indicates a hydrogen atom or an alkyl group having a carbon number of 1 to 20, R² to R¹² indicates R², R³, R⁴, R⁵, R⁶, R⁷, R⁸, R⁹, R¹⁰, R¹¹ and R¹² respectively indicating any one of a hydrogen atom, an alkyl group having a carbon number of 1 to 20, a hydroxyl group, an alkoxy group having a carbon number of 1 to 20 and a halogen group.) 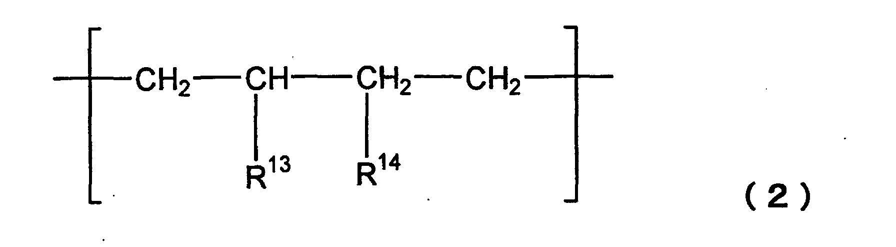 (In the formula (2), R¹³ and R¹⁴ respectively indicate any one of a hydrogen atom, an alkyl group having a carbon number of 1 to 20, a halogen group and an aryl group.) 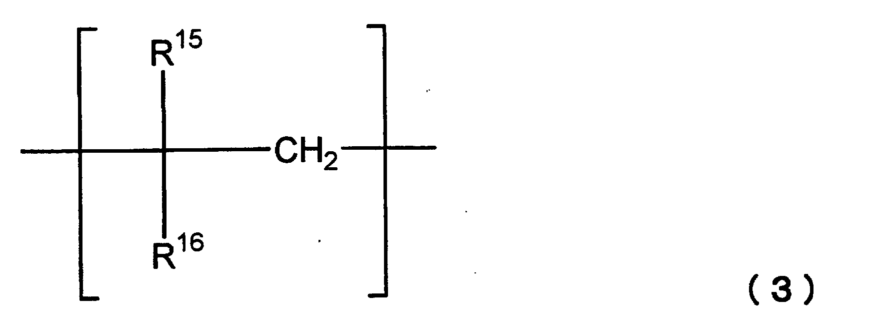 (In the formula (3), R¹⁵ and R¹⁶ respectively indicate any one of a hydrogen atom, an alkyl group having a carbon number of 1 to 20, a halogen group and an aryl group.)

A content of the repeating unit [1] in the polymer block [A] is 90 wt% or more, and a total content of the repeating unit [2] and the repeating unit [3] in the polymer block [B] is 30 wt% or more.

When a weight fraction of all repeating unit composing the polymer block [A] accounting in the whole block copolymer is wA and a weight fraction of all repeating units composing the polymer block [B] accounting in the whole block copolymer is wB, the ratio (wA : wB) of the wA and wB is 30:70 to 90:10.

Weight average molecular weight of the whole block copolymer is 20,000 to 300,000, preferably 50,000 to 150,000.

When a weight fraction of the repeating unit [2] accounting in the whole block copolymer is w2 and a weight fraction of the repeating unit [3] accounting in the whole block copolymer is w3, preferably, a sum (w2 + w3) of the w2 and w3 is 10 to 60 wt%.

Preferably, a block copolymer of the present invention is a triblock copolymer wherein one of each of the polymer block [A1] and polymer block [A2] are bonded with both ends of the polymer block [B].

Preferably, weight average molecular weight of each block portion in a block copolymer is 2,000 to 300,000 in a polymer block [A] portion and 1,000 to 200,000 in a polymer block [B] portion.

Preferably, a molecular weight distribution of the whole block copolymer is 4 or less in the ratio (Mw / Mn) of weight average molecular weight and number average molecular weight.

According to the present invention, a molded object obtained by molding any one of the above block copolymers.

Preferably, the molded object of the present invention is a light guide plate of a liquid crystal display device.

Preferably, the molded object of the present invention is a light diffusion plate of a liquid crystal display device.

According to the present invention, there is provided a process for producing a block copolymer comprising at least three polymer blocks, comprising:
a first step for polymerizing a monomer mixture (a1) including 90 wt% or more in total of at least one kind selected from a group composed of an aromatic vinyl compound, an unsaturated alicyclic vinyl compound having unsaturated bond in the ring and a saturated alicyclic vinyl compound;
a second step for polymerizing a monomer mixture (b1) including 30 wt% or more in total of at least one kind selected from a group composed of a chain vinyl based compound and a chain conjugated diene based compound; and
a third step for polymerizing a monomer mixture (a2) including 90 wt% or more in total of at least one kind selected from a group composed of an aromatic vinyl compound, an unsaturated alicyclic vinyl compound having unsaturated bond in the ring and a saturated aclicyclic vinyl compound (note that the weight ratio of use amounts of the monomer mixture (a1) and the monomer (a2) is 1.5 or more).

In the process for producing a block copolymer of the present invention, preferably, a fourth step for hydrogenating unsaturated bond of a block copolymer when the block copolymer obtained by the first to third steps has unsaturated bond (including unsaturated bond in an aromatic ring) is furthermore included.

Preferably, a monomer mixture (a1) including 90 wt% or more in total of at least one kind of an aromatic vinyl compound selected from a group composed of styrene, α-methyl styrene, 2-methyl styrene, 3-methyl styrene and 4-methyl styrene is used.

According to the present invention, a block copolymer having excellent fluidity at the time of molding and mechanical strength at the time of punching processing, a process for producing the block copolymer and a molded object obtained by molding the block copolymer are provided.

### BEST MODE FOR CARRYING OUT THE INVENTION

### Block Copolymer

A block copolymer according to the present invention is a block copolymer comprising a polymer block [A] including two or more repeating units [1] expressed by the formula (1) below and
a polymer block [B] including one or more repeating unit [2] expressed by the formula (2) below and/or a repeating unit [3] expressed by the formula (3) below,
characterized in that, when a polymer block having the heaviest weight average molecular weight is a polymer block [A1], the weight average molecular weight of the polymer block [A1] is Mw (A1), a polymer block having the lightest weight average molecular weight is a polymer block [A2], and the weight average molecular weight of the polymer block [A2] is Mw (A2) in the polymer block [A], the ratio (Mw (A1) / Mw (A2)) of the Mw (A1) and Mw (A2) is 1.5 or more, preferably 1.7 or more, more preferably 2.0 or more. When the Mw (A1) / Mw (A2) is in the above range, both of fluidity at the time of molding and strength at the time of punching processing improve.

Namely, it is sufficient that, in the block copolymer according to the present invention, two or more polymer blocks [A] exist and when comparing weight average molecular weight (mw) of the respective polymer blocks, one or more sets of polymer blocks wherein the ratio is 1.5 or more exist.

An upper limit of the number of the polymer blocks [A] in the block copolymer according to the present invention is preferably 10, more preferably 5. A form of the block may be a chain block or radial block. The most preferable form of a block copolymer of the present invention is a triblock copolymer wherein one of each of polymer blocks [A1] and polymer blocks [A2] are bonded with both ends of the polymer block [B].

The repeating unit [1] included in the polymer block [A] is expressed by the formula (1) below.

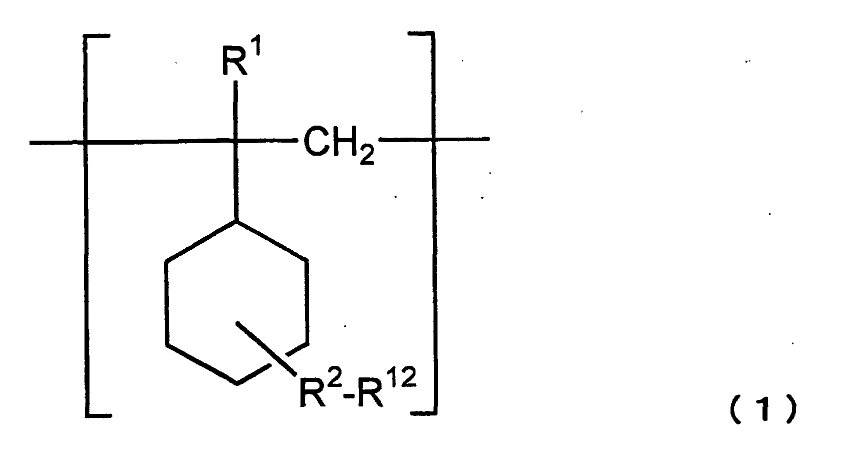

Here, in the formula (1), R¹ indicates a hydrogen atom or an alkyl group having a carbon number of 1 to 20. The R² to R¹² indicates R², R³, R⁴, R⁵, R⁶, R⁷, R⁸, R⁹, R¹⁰, R¹¹ and R¹² respectively indicating any one of a hydrogen atom, an alkyl group having a carbon number of 1 to 20, a hydroxyl group, an alkoxy group having a carbon number of 1 to 20 and a halogen group.

The preferable configuration of the repeating unit [1] is the case where R¹ is a hydrogen atom or a methyl group and all of R² to R¹² are hydrogen atoms.

A content of the repeating unit [1] in the polymer block [A] is normally 90 wt% or more, preferably 95 wt% or more. When assuming that a weight fraction of the repeating unit [1] in the polymer block [A] accounting in the whole block copolymer is w1A, the lower limit of the w1A is preferably 30 wt%, more preferably 40 wt% or more, particularly preferably 50 wt%, and the upper limit is preferably 90 wt%. When the weight fraction of the repeating unit [1] is in the above range, heat resistance at the time of molding improves.

The rest of the polymer block [A] other than the repeating unit [1] is preferably a substance wherein carbon-carbon unsaturated bond of repeating unit originating from a chain conjugated diene or chain vinyl compound is hydrogenated.

The repeating unit [2] and/or repeating unit [3] included in the polymer block [B] are expressed by the formulas (2) and (3) below.

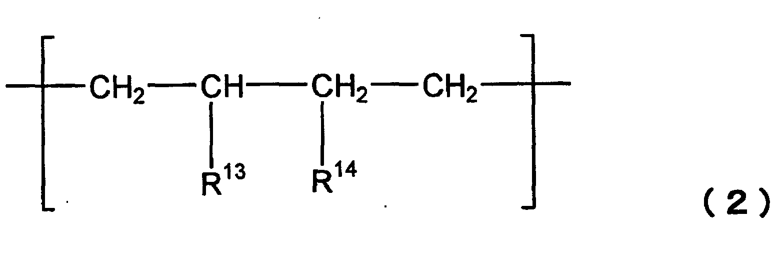

Here, in the formula (2), R¹³ and R¹⁴ respectively indicate any one of a hydrogen atom, an alkyl group having a carbon number of 1 to 20, a halogen group and an aryl group. 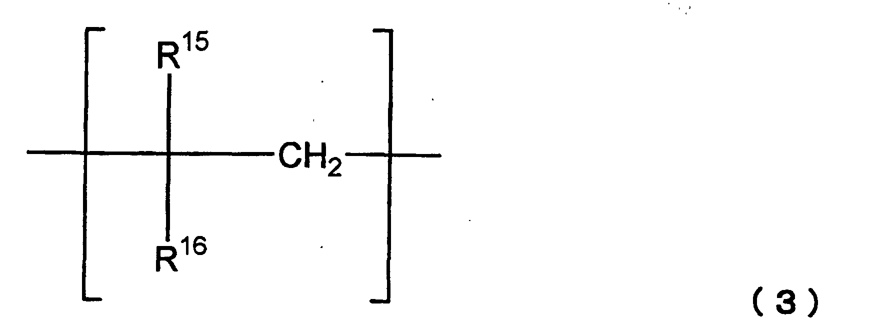 here, in the formula (3), R¹⁵ and R¹⁶ respectively indicate any one of a hydrogen atom, an alkyl group having a carbon number of 1 to 20, a halogen group and an aryl group.

A preferable configuration of the repeating unit [2] is the case where R¹³ and R¹⁴ are hydrogen atoms or a methyl group.

A preferable configuration of the repeating unit [3] is the case where R¹⁵ is a hydrogen atom and R¹⁶ is an ethyl group or an isopropyl group.

A content of the repeating unit [2] and the repeating unit [3] in the polymer block [B] is normally 30 wt%, preferably 50 wt% in total.

When assuming that a weight fraction of the repeating unit [2] accounting in the whole block copolymer is w2 (wt%) and a weight fraction of the repeating unit [3] accounting in the whole block copolymer is w3 (wt%), the total (w2+w3) of the w2 and w3 is normally 5 wt%, preferably 10 to 60 wt%, more preferably 15 to 50 wt%. When the total weight fraction of the repeating unit [2] and the repeating unit [3] is in the above range, fluidity at the time of molding and punching performance improve.

Note that the polymer block [B] may include the above repeating unit [1]. In this case, a content of the repeating unit [1] in the polymer block [B] is normally 70 wt% or less, preferably 50 wt% or less. As the content of the repeating unit [1] in the polymer block [B] increases, transparency of the molded object improves. However, when it becomes too great, the molded object becomes fragile and mechanical strength declines.

When assuming that the weight fraction of the repeating unit [1] in the polymer block [B] accounting in the total block copolymer is w1B, the w1B is preferably 50 wt% or less, more preferably 40 wt% or less, furthermore preferably 30 wt% or less, and the lower limit is 0 wt%.

Furthermore, in the present invention, relationship of the w1B and the above w1A is preferably w1B<w1A.

The polymer block [A] and the polymer block [B] may furthermore include a repeating unit [X] expressed by the formula (4) below.

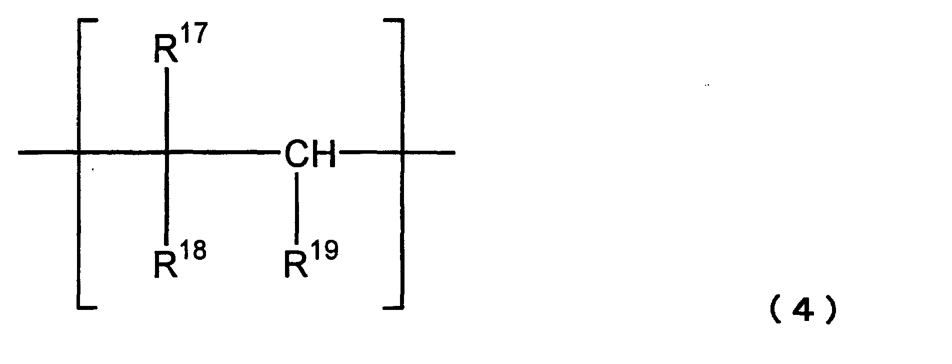

Here, in the formula (4), R¹⁷ indicates a hydrogen atom or an alkyl group having a carbon number of 1 to 20. The R¹⁸ indicates a nitrile group, an alkoxy carbonyl group, a hydroxyl carbonyl group or a halogen group. The R¹⁹ is hydrogen. Alternately, the R¹⁸ and R¹⁹ may form an acid anhydride group or an imide group.

When the repeating unit [X] exists in the block copolymer, while bonding strength in the case where two or more molded objects made by the block copolymer of the present invention are bonded to be used is improved, it is liable that hydroscopic property of the molded object becomes high and the molded object becomes easily deformed. Accordingly, in order to suppress deformation due to moisture absorption while improving the bonding strength at the time of bonding two or more together for use, the weight fraction wX (wt%) accounting in the block copolymer of the repeating unit [X] is made preferably 20 wt% or less, more preferably 10 wt% or less.

In the block copolymer according to the present invention, when assuming that the weight fraction of all repeating units composing the polymer block [A] accounting in the whole block copolymer is wA and that of all repeating units composing the above polymer block [B] accounting in the whole block copolymer is wB, the ratio (wA:wB) of the wA and wB is normally 30:70 to 90:10, preferably 35:65 to 85:15, more preferably 40:60 to 80:20. When the (wA:wB) is in the above range, a molded object having excellent mechanical strength and heat resistance, etc. is obtained.

A block copolymer according to the present invention has a weight-average molecular weight (Mw) in a polystyrene conversion measured by gel permeation chromatography (GPC) using tetrahydrofuran (THF) as a solvent is normally 20,000 to 300,000, preferably 30,000 to 200,000, more preferably 50,000 to 150,000. When the Mw of the block copolymer is in the above range, mechanical strength, heat resistance, moldability and low birefringence, etc. of the molded object are improved. Also, the weight-average molecular weight of respective block portions in the block copolymer is preferably 2,000, to 300,000 in a polymer block [A] portion and 1,000 to 200,000 in a polymer block [B] portion.

A molecular weight distribution of a block copolymer according to the present invention may be suitably selected in accordance with a use object, but the ratio (Mw/Mn) of the Mw and number average molecular weight (Mn) in a polystyrene conversion measured by the GPC is preferably 4 or less, more preferably 3 or less, particularly preferably 2 or less. When the Mw/Mn is in this range, a molded object having excellent mechanical strength and heat resistance, etc. is obtained.

The glass-transition temperature (Tg) of a block copolymer according to the present invention may be suitably selected in accordance with a use object, but a measurement value by the differential scanning calorimetry (DSC) is normally 0°C to 150°C, preferably 50°C to 145°C, more preferably 90°C to 140°C.

### Process for producing Block Copolymer

The block copolymer according to the present invention explained above can be produced, for example, as below.

A process for producing the block copolymer according to the present invention is a process for producing a block copolymer comprising at least three polymer blocks, comprising:
a first step for polymerizing a monomer mixture (a1) including 90 wt% or more in total of at least one kind selected from a group composed of an aromatic vinyl compound, an unsaturated alicyclic vinyl compound having unsaturated bond in the ring (hereinafter, referred to as vinyl cycloalkene) and a saturated alicyclic vinyl compound (hereinafter, referred to as vinyl cycloalkane);
a second step for polymerizing a monomer mixture (b1) including 30 wt% or more in total of at least one kind selected from a group composed of a chain vinyl based compound and a chain conjugated diene based compound; and
a third step for polymerizing a monomer mixture (a2) including 90 wt% or more in total of at least one kind selected from a group composed of an aromatic vinyl compound, vinyl cycloalkene and vinyl cycloalkane (note that the weight ratio of use amounts of the monomer mixture (a1) and the monomer (a2) is 1.5 or more).

The above first step is a step wherein a monomer mixture including 90 wt% or more in total of at least one kind selected from a group of an aromatic vinyl compound, vinyl cycloalkene and vinyl cycloalkane (hereinafter, also referred to as a monomer mixture (a)) is used most in all steps of polymerization. The above third step is a step wherein the monomer mixture (a) is used least.

The ratio (a1/a2) of a use amount of a monomer mixture (a2) in the third step to a use amount of a monomer mixture (a1) in the first step is 1.5 or more, preferably 1.7 or more, and more preferably 2.0 or more in the weight ratio.

In a process for producing of the present invention, the all use amount of the monomer mixtures (a1) and (a2) become polymer blocks, respectively. Accordingly, in an obtained block copolymer before hydrogenation, the ratio of Mw of a polymer block originating from the monomer mixture (a2) to Mw of a polymer block originating from the monomer (a1) becomes 1.5 or more, preferably 1.7 or more, more preferably 2.0 or more in the weight ratio.

Also, the relative ratio of the weight-average molecular weight (Mw) of the respective polymer blocks does not change even after hydrogenation. Accordingly, the ratio of Mw of a hydrogenated block of the polymer block originating from the monomer mixture (a2) to Mw of a hydrogenated block of the polymer block originating from the monomer mixture (a1) becomes 1.5 or more, preferably 1.7 or more, more preferably 2.0 or more in the weight ratio.

In the process for producing of the present invention, in addition to the above steps,
a step of polymerizing a monomer mixture (a) including 90 wt% or more in total of at least one kind selected from a group composed of an aromatic vinyl compound, vinyl cycloalkene and vinyl cycloalkane (hereinafter, the above monomer mixtures (a1) and (a2) are also referred to as a monomer mixture (a)), and
a step of polymerizing a monomer mixture (b) including 30 wt% or more in total of at least one kind of a chain vinyl based compound and a chain conjugated diene based compound (hereinafter, the above monomer mixture (b1) is also referred to as a monomer mixture (b))
may be furthermore included.

Note that the monomer mixture (b) may include at least one kind selected from a group composed of an aromatic vinyl compound, vinyl cycloalkene and vinyl cycloalkane by the ratio of 70 wt% or less in total.

As an aromatic vinyl compound which can be used in the process for producing of the present invention, for example, styrene, α-methyl styrene, 2-methyl styrene, 3-methyl styrene, 4-methyl styrene, 2,4-diisopropyl styrene, 2,4-dimethyl styrene, 4-t-butyl styrene, 5-t-butyl-2-methyl styrene, 4-monochloro styrene, dichloro styrene, 4-monofluoro styrene and 4-phenyl styrene, etc. may be mentioned.

As vinyl cycloalkene which can be used in the process for producing of the present invention, for example, 4-vinyl cyclohexene, 4-isopropenyl cyclohexene, 1-methyl-4-vinyl cyclohexene, 2-methyl-4-vinyl cyclohexene, 1-methyl-4-isopropenyl cyclohexene, 2-methyl-4-isopropenyl cyclohexene, 3-vinyl cyclopentene, 4-vinyl cyclopentene, 5-vinylbicyclo[2.2.1]hepta-2-ene, etc. may be mentioned.

As vinyl cycloalkane which can be used in the process for producing of the present invention, for example, vinyl cyclobutane, vinyl cyclopentane, vinyl cyclohexane, 2-vinylcyclo[2.2.1]heptane, isopropenyl cyclohexane, 3-methylvinyl cyclohexane, 4-methylvinyl cyclohexane, 3-methyl isopropenyl cyclohexane, 4-methylisopropenyl bicyclohexane, etc. may be mentioned.

These compounds may have a substituent, such as a halogen group, an alkoxy group and hydroxyl group. Also, these compounds may be used alone or in combination of two or more kinds.

Among these, when using an aromatic vinyl compound or/and vinyl cycloalkene, a polymerization yield becomes high and the introduction rate of the monomer to the polymer block [B] becomes high. Furthermore, it is preferable to use at least one kind of aromatic vinyl compound selected from a group composed of styrene, α-methyl styrene, 2-methyl styrene, 3-methyl styrene and 4-methyl styrene among them.

As chain vinyl based compounds which can be used in the process for producing of the present invention, for example, ethylene, propylene, 1-butene, 1-pentene, 1-hexene, 1-heptene, 1-octene, 1-nonene, 1-decene, 1-dodecene, 1-eicosen, 4-methyl-1-pentene and 4,6-dimethyl-1-heptene and other chain olefins may be mentioned. Among them, ethylene and propylene are preferable.

As a chain conjugated diene based compound which can be used in the process for producing of the present invention, for example, 1,3-butadiene, isoprene, 2,3-dimethyl-1,3-butadiene, etc. may be mentioned. Among them, 1,3-butadiene and isoprene are preferable.

In the above method, the monomer mixture (a) and the monomer mixture (b) may include a vinyl based compound other than the above. As such a vinyl based compound, for example, acrylonitrile, methacrylonitrile, 1-cyano-1-croloethylene, and other nitrile based monomers; 2-methoxycarbonyl-propene, 2-ethoxycarbonyl-propene, 2-propoxycarbonyl-propene, 2-butoxycarbonyl-propene, 1-methoxycarbonyl ethylene, 1-ethoxycarbonyl ethylene, 1-propoxycarbonyl ethylene, 1-butoxycarbonyl ethylene and other (metha)acrylic ester based monomers; 1-carboxy ethylene, 1-carboxy-1-methyl ethylene, maleic anhydride and other unsaturated fatty acid monomers; 1-hydrocarbonyl ethylene, 2-hydrocarbonyl-propene, 1-methylcarbonyl ethylene, 2-methylcarbonyl-propene, N-phenylmaleimide, etc. may be mentioned.

As a method of polymerizing respective polymer blocks by using the above monomer mixtures, any of radical polymerization, anionic polymerization, cationic polymerization, coordinate anionic polymerization, coordinate cationic polymerization, etc. may be used. When using a method of performing radical polymerization, anionic polymerization, cationic polymerization, etc. by living polymerization, particularly when using a method of performing by living anionic polymerization, a polymerization operation and hydrogenation reaction in subsequent steps become easy and transparency of a block copolymer to be obtained is improved.

Polymerization is performed in the presence of a polymerization initiator and in a temperature range of normally 0°C to 150°C, preferably 10°C to 100°C, particularly preferably 20°C to 80°C. In the case of living anionic polymerization, as an initiator, for example, n-butyl lithium, sec-butyl lithium, t-butyl lithium, hexyl lithium, phenyl lithium and other mono organolithium; dilithiomethane, 1,4-dilithiobutane, 1,4-dilithio-2-ethylcyclohexane and other polyfunctional organolithium compounds, etc. can be used.

A pattern of polymerization reaction may be any of solution polymerization and slurry polymerization, etc., but when using solution polymerization, reaction heat can be easily removed. In this case, an inactive solvent for dissolving polymers obtained in respective steps is used. As a usable inactive solvent, for example, n-butane, n-pentane, isopentane, n-hexane, n-heptane, isooctane, and other aliphatic hydrocarbons; cyclopentane, cyclohexane, methylcyclopentane, methylcyclohexane, decalin, bicyclo[4.3.0]nonane, tricyclo[4.3.0.1^{2,5}]decane and other alicyclic hydrocarbons; benzene, toluene and other aromatic hydrocarbons, etc. may be mentioned. Among them, it is preferable to use alicyclic hydrocarbons, because it can be also used as it is as an inactive solvent in the later explained hydrogenation reaction and solubility of a block copolymer is preferable. These solvents may be used alone or in combination of two or more kinds. A use amount of these solvents is normally 200 to 2000 parts by weight with respect to 100 parts by weight of all monomer to be used.

When respective monomer mixtures are composed of two or more kinds of compounds, a randomizer, etc. can be used to prevent a chain of only a certain compound from becoming long. Particularly, when performing polymerization reaction by anionic polymerization, it is preferable to use a Lewis base compound, etc. as the randomizer.

As a usable Lewis base compound, for example, dimethyl ether, diethyl ether, diisopropyl ether, dibutyl ether, tetrahydrofuran, diphenyl ether, ethylene glycol diethyl ether, ethylene glycol methylphenyl ether, and other ether compounds; tetramethyl ethylene diamine, trimethylamine, triethylamine, pyridine, and other tertiary amine compounds; potassium-t-amyl oxide, potassium-t-butyl oxide and other alkali metal alcoxide compounds; triphenyl phosphine and other phosphine compounds; etc. may be mentioned. These Lewis base compounds may be used alone or in combination of two or more kinds.

In the process for producing of the present invention, a molecular weight of a block copolymer obtained by polymerization reaction is preferably 20,000 to 300,000, more preferably 30,000 to 200,000, furthermore preferably 50,000 to 150,000 in Mw in a polystylene conversion measured by the GPC using THF as a solvent. Also, a molecular weight distribution (Mw/Mn) of the whole block copolymer is made to be preferably 4 or less, more preferably 3 or less, particularly preferably 2 or less. By making the Mw and the Mw/Mn to be in the above ranges, mechanical strength and heat resistance of the block copolymer (a block copolymer after hydrogenation when performing the later explained hydrogenation reaction) are improved. Furthermore, when hydrogenation reaction is performed, the hydrogenation rate becomes high, and transparency and thermal instability, etc. of the obtained block copolymer are improved.

When the block copolymer obtained by the above first to third steps has unsaturated bond (including unsaturated bond in an aromatic ring), preferably a fourth step for hydrogenating the unsaturated bond of the block copolymer is furthermore included.

A hydrogenation method and a pattern of reaction of unsaturated bond are not particularly limited and may be performed by following a well-known method, but a hydrogenation method capable of heightening the hydrogenation rate and bringing small reaction of cleaving the chain of the polymer is preferable. As the preferable hydrogenation method, a method of using a catalyst including at least one kind of metal selected from nickel, cobalt, iron, titanium, rhodium, palladium, platinum, ruthenium, rhenium, etc. may be mentioned. As the hydrogenation catalyst, either of heterogeneous catalyst and homogeneous catalyst may be used, and the hydrogenation reaction is preferably performed in an organic solvent.

The usable heterogeneous catalyst may be used as it is as a metal or a metal compound, or by being suitably supported by a carrier. As the carrier, for example, active carbon, silica, alumina, calcium carbonate, titania, magnesia, zirconia, diatomaceous earth, silicon carbide, calcium fluoride, etc. may be mentioned. A carrying weight of the catalyst is normally in a range of 0.1 to 60 wt%, preferably 1 to 50 wt% with respect to a total amount of the catalyst and carrier. As the carried catalyst, for example, those having a specific surface area of 100 to 500 m²/g, and an average pore diameter of 100 to 1000 Å, preferably 200 to 500 Å are preferable. A value of the above specific surface area is a value obtained by measuring a nitrogen absorption quantity and calculating by using the BET formula, and a value of the average pore diameter is a value measured by the mercury pressing method.

As a usable homogeneous catalyst, for example, a catalyst of combining nickel, cobalt, titanium or an iron compound with an organic metal compound (for example, an organic aluminum compound or organic lithium compound); rhodium, palladium, platinum, ruthenium and rhenium, and other organic metal complex catalysts, etc. may be used.

As nickel, cobalt, titanium or an ion compound, for example, an acetyl acetonato compound, carboxylate, and cyclopentadienyl compound, etc. of various metals are used. As an organic aluminum compound, triethyl aluminum, triisobutyl aluminum and other alkyl aluminum; diethyl aluminum chloride, ethyl aluminum dichloride and other aluminum halides; diisobutyl aluminum hydride and other alkyl aluminum hydrides, etc. may be mentioned.

As an organic metal complex catalyst, for example, dihydride-tetrakis (triphenyl phosphine) ruthenium, dihydride-tetrakis (triphenyl phosphine) iron, bis (cyclooctadiene) nickel, bis (cyclopentadienyl) nickel and other transition metal complex may be mentioned.

These hydrogenation catalysts may be used alone or in combination of two or more kinds. A use amount of the hydrogenation catalyst is normally 0.01 to 100 parts by weight, preferably 0.05 to 50 parts by weight, more preferably 0.1 to 30 parts by weight with respect to 100 parts by weight of a polymer.

A temperature of hydrogenation reaction is normally 10°C to 250°C, preferably 50°C to 200°C, and more preferably 80 °C to 180°C, so that the hydrogenation rate becomes high and molecular scission is reduced. Also, a hydrogen pressure is normally 0.1 MPa to 30 MPa, preferably 1 MPa to 20 MPa, more preferably 2 MPa to 10 MPa, so that the hydrogenation rate becomes high, molecular scission is reduced and operationality becomes superior.

The hydrogenation rate of the block copolymer in both of carbon-carbon unsaturated bond of a main chain and a side chain and carbon-carbon unsaturated bond of an aromatic ring and cycloalkene ring are made to be preferably 90% or more, more preferably 97% or more, furthermore preferably 99% or more in measurement by ¹H-NMR. When the hydrogenation rate is high, the low birefringence and thermal instability of the block copolymer to be obtained are improved.

Below, a process for producing of the present invention will be explained further in detail by taking as an example a method of obtaining the most preferable triblock copolymer of the present invention.

First, by polymerizing a monomer mixture (a1) in an organic solvent solution, a polymer composed of a polymer block [A1] is obtained. Next, by polymerizing a monomer mixture (b) in an organic solvent solution of a polymer composed of the obtained polymer block [A1], a diblock copolymer composed of the polymer block [A1] and a polymer block [B] is obtained. Next, in the organic solvent solution of the obtained diblock copolymer, a monomer mixture (a2) is polymerized at ends on the polymer block [B] side, so that a triblock copolymer wherein one polymer block [A] is bonded with each of both ends of the polymer block [B] is obtained.

Note that when the obtained triblock copolymer has unsaturated bond (including those in an aromatic ring), by furthermore making the unsaturated portion saturated by hydrogenation reaction, the most suitable triblock copolymer of the present invention can be obtained.

After removing a hydrogenation catalyst and/or a polymerization catalyst from a reaction solution including the block copolymer by a method of filtration or centrifugation, etc., the block copolymer obtained by the process for producing of the present invention explained above is recovered from the reaction solution.

As a method of recovering the block copolymer form the reaction solution, well known methods of, for example, a steam solidification method for removing a solvent from a solution dissolved with a block copolymer by steam stripping, a direct desolvation method for removing a solvent under reduced pressure and heating, and a solidification method for pouring a solution into a poor solvent of the block copolymer, depositing and solidificating, etc. may be mentioned.

A form of the recovered block copolymer is not limited, but is normally made to be a pellet form for easy mold processing thereafter. When using the direct desolvation method, for example, the block copolymer in a molten state is extruded from a die in strands, cooled, cut to be a pellet form by a pelletizer so as to be used for various molding. When using the solidification method, for example, the obtained coagulation is dried, extruded in a molten state by an extrusion machine, made to be a pellet form in the same way as the above to be used for various molding.

### Optional Components

A block copolymer according to the present invention may be blended with a variety of compounding agents as optional components in accordance with need, and can be used as a polymer composition for a molding material of a variety of molded objects.

As the compounding agent which can be blended, for example, an antioxidant, heat stabilizer, light stabilizer, weather proof stabilizer, ultraviolet absorbent, near-infrared ray absorbent and other stabilizers; lubricant, plasticizer and other resin modifying agents; colorant, pigment and other coloring agents; antistatic agents; organic diffusion agent, inorganic diffusion agent and other light diffusion agents; etc. may be mentioned. These compounding agents may be used alone or in combination of two or more kinds, and the compounding amount is suitably selected in a range of not undermining the object of the present invention.

As the antioxidant, for example, phenol based antioxidants, phosphorus based antioxidants, sulfur based antioxidants, etc. may be mentioned, and among these, phosphorus based antioxidants, particularly alkyl substituted phenol based antioxidant is preferable. By compounding these antioxidants, coloring and a decline of strength of a molded object due to deterioration by oxidization at the time of molding can be prevented without deteriorating transparency and low water-absorbing property, etc.

These antioxidants may be used alone or in combination of two or more kinds. The compounding amount of the antioxidant is suitably selected in a range of not undermining the object of the present invention, but is normally 0.001 to 5 parts by weight, preferably 0.01 to 1 part by weight with respect to 100 parts by weight of the block copolymer.

Also, the block copolymer according to the present invention may be blended with other kinds of polymers (rubber and resin) in accordance with need, so that it can be used as a polymer composition for a molding material of various molded objects.

As other kinds of polymers (rubber and resin) which can be blended, polyethylene, polypropylene, and other olefin based polymers; polyisobutylene, isobutylene isoprene rubber and other isobutylene based polymers; polybutadiene, polyisoprene, butadiene styrene random copolymer, isoprene styrene random copolymer, acrylonitril butadiene copolymer, acrylonitril butadiene styrene copolymer, butadiene styrene block copolymer, styrene butadiene styrene block copolymer, isoprene styrene block copolymer, styrene isoprene styrene block copolymer and other diene based polymers; polybutyl acrylate, polyhydroxyethyl methacrylate and other acrylic based polymers; polyvinyl alcohol, polyvinyl acetate, vinyl acetate styrene copolymer and other vinyl based polymers; polyethylene oxide, polypropylene oxide, epichlorohydrin rubber, and other epoxy based polymers; vinylidene fluoride based rubber, tetrafluoroethylene-propylene rubber, and other fluorine based polymers; etc. may be mentioned. These flexible polymers may have the cross-linked structure, or a functional group may be introduced by degeneration reaction.

Diene based polymers are preferable among the above polymers, particularly, a hydride obtained by hydrogenating carbon-carbon unsaturated bond of the polymer is superior in terms of rubber elasticity, mechanical strength, flexibility and dispersability.

As a method of uniformly dispersing the above compounding agent in the block copolymer according to the present invention, for example, a method of dissolving the compounding agent in a suitable solvent, adding to a solution of the block copolymer, then, removing the solvent to recover the block copolymer including the compounding agent; a method of making the resin in a molten state by a mixer, twin-screw kneader, roll, Brabender, extruding machine, etc. and kneading with the compounding agent; etc. may be mentioned.

### Molding and Molded object

A block copolymer according to the present invention can be used in various ways by being molded to various molded objects.

As the molding method, while not particularly limited, it is preferable to use a melt processing method to obtain a molded object having excellent size stability and mechanical strength, etc. As the melt processing method, an injection molding method, injection compression molding method, extruding molding method, extruding drawing molding method, multilayer extruding molding method, press molding method, blow molding method, injection blow molding method, inflation molding method, etc. may be mentioned, but in terms of low birefringence and size stability, etc., the injection molding method, injection compression molding method and extruding molding method are preferable. For example, the injection molding method is preferable in molding a molded object having uneven thickness, while the extruding molding method and injection molding method are preferable for a large sized thin molded object.

Molding conditions are suitably selected in accordance with the use object and a molding method. For example, in the case of the injection molding method, a resin temperature is suitably selected in a range of normally 150 to 350°C, preferably 200 to 300°C, more preferably 230 to 280°C. When the resin temperature is excessively low, fluidity declines and sinkmark and warps arise on the molded object, while when the resin temperature is excessively high, silver streaks due to thermal decomposition of the resin arise, the molded object becomes yellowish or other molding failure may be caused.

The molded object may be a variety of shapes, such as a plate shape, a sheet shape, a spherical shape, a stick shape and a cylinder shape, but the block copolymer of the present invention is preferable for a thin plate shaped large molded object. A plate shaped molded object may be a wedge shape wherein the thickness gradually changes. Also, when the thickness of the molded object is 1.0 mm or less, the effect of using the block copolymer of the present invention becomes more remarkable.

The molded object of the present invention having the above shape is best suited to an optical member. As the optical member, for example, a liquid crystal substrate, a polarizing film, a phase difference film, a light guide plate for a liquid crystal display device, light diffusion plate and other liquid crystal display related members; an image pickup lens of a camera, a finder lens, an optical disk pickup lens, an optical disk collimate lens, an fθ lens of a laser beam printer, a sensor lens, a projection lens for a projector, a scanner lens and other optical lenses; a rewritable optical disk substrate, digital versatile disk (DVD) substrate and other optical disk substrates; and an optical card and other optical information recording medium substrates; etc. may be mentioned. Among them, the effect becomes more remarkable when used as a light guide plate and light diffusion plate, etc.

Also, as other use applications, it can be used for a blood test cell, an injection syringe, a catheter, a petri dish, a pipet, a pipe, a tube and other medical and laboratory equipments; a prefilled syringe, an ample, a bottle, a vial, a cup and other containers; a wrap film, a stretch film, a shrink film, a press through package film, bubble package film and other packaging films.

### Examples

Below, the present invention will be explained further in detail by giving examples of producing, examples and comparative examples. Note that the present invention is not limited to the examples of producing and examples. The "part" and "%" in the examples are on the weight basis unless otherwise mentioned.

Measurements of various properties were made by following methods below.

### (1) Molecular Weight of Block Copolymer (Mw)

The Mw in a standard polystyrene conversion was obtained by measuring by the GPC at 30°C by using THF as a solvent.

### (2) Molecular Weight Distribution (Mw/Mn)

Mw/Mn was calculated by obtaining the Mw and Mn in a standard polystyrene conversion by measuring by the GPC at 30°C by using THF as a solvent.

### (3) Hydrogenation Rate

The hydrogenation rate of a main chain and aromatic ring of the block copolymer was obtained by measuring ¹H-NMR spectrum and calculating.

### (4) Glass Transition Temperature (Tg)

A value obtained from a displacement point on the high temperature side by measuring by the DSC based on the JIS-K7121 was regarded as the Tg of the block copolymer.

### (5) Fluidity (MI)

Measurement was made based on the JIS-K7210 at a test temperature of 260°C and a test load of 21.18N.

### (6) Bend Test

A test piece of 150 mm × 600 mm having a thickness of 1 mm was molded by hot press, and the test was conducted under conditions of a load cell of 10 kN, a distance between supporting points of 30 mm and a crosshead speed of 5 mm/min.

### (7) Punching Property

A flat plate having a thickness of 1 mm obtained by molding the block copolymer was punched with a punching mold (punching knife) of 300 mm × 230 mm and evaluated. Those punched well with no breaks and cracks, etc. at all were marked "O" and those with even one breaking or crack were marked "x".

### Example 1

Polymerization was brought to start by putting in a sufficiently nitrogen-substituted reactor provided with a mixer 320 parts of anhydrous cyclohexane, 12 parts of anhydrous styrene and 0.095 parts of n-dibutylether, and adding 0.103 parts of n-butyl lithium (15% cyclohexane solution) while mixing at 60°C. The result was mixed to react at 60°C for 60 minutes. The polymerization inversion rate was 99.5% at this point.

Next, 4 parts of anhydrous isoprene was added and mixing was continued for 30 minutes as it is. The polymerization inversion rate was 99% at this point.

After that, 4 parts of anhydrous styrene was furthermore added and mixed for 60 minutes. The polymerization inversion rate was 100% at this point. At this point, 25 parts of isopropyl alcohol was added and the reaction was stopped. A weight average molecular weight (Mw) of the obtained block copolymer was 100,000, and a molecular weight distribution (Mw/Mn) was 1.05. The Mw of each of the polymer blocks was 60,000 in a styrene polymer block (St1) which was polymerized first, 20,000 in an isoprene polymer block (Ip), and 20,000 in a styrene polymer block (St2) which was polymerized on a second time.

Next, 100 parts of the above polymer solution was moved to a pressure tight reactor provided with a mixer and 0.8 parts of silica-alumina carried nickel catalyst (E22U, nickel carrying weight 60% made by Nikki Chemical Co., Ltd.) was added as a hydrogenation catalyst and mixed. Inside the reactor was substituted by a hydrogen gas, hydrogen is supplied while mixing the solution, and hydrogenation reaction was proceeded at a temperature of 170°C and a pressure of 4.5 MPa for 6 hours.

After finishing the hydrogenation reaction, the reaction solution was filtrated to remove the hydrogenation catalyst, then, 0.1 part of TOMINOX TT (made by Yoshitomi Fine Chemicals) was blended with respect to 100 parts of resin. The solvent was removed from the resin solution under a reduced pressure at 260°C, and pelletized by being extruded out in strands by an extruding machine. The obtained block copolymer had the MW of 85,000, the Mw/Mn of 1.14, the hydrogenation rate of 99.9%, the Tg of 129°C, and the MI of 5g / 10 min. The Mw ratio of the respective polymer blocks was a hydrogenated block (StH1) of the polymer block (St1) : a hydrogenated block of the polymer block (Ip) : a hydrogenated block (StH2) of the polymer block (St2) = 3:1:1 (equal to St1:Ip:St2), the Mw ratio of the StH1 and StH2 was 3, and the rate of the polymer block originating from isoprene in the block copolymer was 20%.

After drying the obtained pellets at 70°C for two hours by using a hot-air dryer ventilating an air, a flat plate of 400 mm × 300 mm having a thickness of 1 mm was molded by using an injection molding device of a side-gate molding type having a hot runner.

The flat plate was punched with a punching knife to be 300 mm × 230 mm. It was preferably punched for breakings and cracks did not arise at all.

Also, a test piece of 150 mm × 600 mm having a thickness of 1 mm was molded by a hot press and the bend test was conducted. The result is shown in Table 1.

### Example 2

Other than changing an adding amount of styrene on the second time from 4 parts to 6 parts, polymerization reaction of a block copolymer was performed in the same method as in the example 1. The weight average molecular weight (Mw) of the obtained block copolymer was 110,000 and the molecular weight distribution (Mw/Mn) was 1.07. The Mw of each of the polymer blocks was 60,000 in St1, 20,000 in Ip and 30,000 in St2.

Then, hydrogenation reaction and pelletization were performed in the same way as those in the example 1. The obtained block copolymer had the Mw of 93,500, the Mw/Mn of 1.19, the hydrogenation rate of 99.9%, the Tg of 130°C, and the MI of 3g / 10 min. The Mw ratio of the respective polymer blocks was StH1 : IpH : StH2 = 6:2:3, the Mw ratio of the StH1 and StH2 was 2, and the rate of a polymer block originating from isoprene in the block copolymer was 18%.

Then, a test piece was produced in the same way as in the example 1 and evaluated. The result is shown in **Table 1.**

### Comparative Example 1

Other than changing an adding amount of styrene on the second time from 4 parts to 12 parts, polymerization reaction of a block copolymer was performed in the same method as in the example 1. The weight average molecular weight (Mw) of the obtained block copolymer was 140,000 and the molecular weight distribution (Mw/Mn) was 1.06. The Mw of each of the polymer blocks was 60,000 in St1, 20,000 in Ip and 60,000 in St2.

Then, hydrogenation reaction and pelletization were performed in the same way as those in the example 1. The obtained block copolymer had the Mw of 119,000, the Mw/Mn of 1.17, the hydrogenation rate of 99.9%, the Tg of 129°C, and the MI of 0.5g / 10 min. The Mw ratio of the respective polymer blocks was StH1 : IpH : StH2 = 3:1:3, the Mw ratio of the StH1 and StH2 was 1, and the rate of a polymer block originating from isoprene in the block copolymer was 14%.

Then, a test piece was produced in the same way as in the example 1 and evaluated. The result is shown in **Table 1.**

### Comparative Example 2

Other than changing an adding amount of styrene on the first time and second time from 12 parts to 8 parts, polymerization reaction of a block copolymer was performed in the same method as in the example 1. The weight average molecular weight (Mw) of the obtained block copolymer was 100,000 and the molecular weight distribution (Mw/Mn) was 1.06. The Mw of each of the polymer blocks was 40,000 in St1, 20,000 in Ip and 40,000 in St2.

Then, hydrogenation reaction and pelletization were performed in the same way as those in the example 1. The obtained block copolymer had the Mw of 85,000, the Mw/Mn of 1.17, the hydrogenation rate of 99.9%, the Tg of 129°C, and the MI of 5g / 10 min. The Mw ratio of the respective polymer blocks was StH1 : IpH : StH2 = 2:1:2, the Mw ratio of the StH1 and StH2 was 1, and the rate of a polymer block originating from isoprene in the block copolymer was 20%.

Then, a test piece was produced in the same way as in the example 1 and evaluated. The result is shown in Table 1.

**Table 1**

| | Mw(A1)/MM(A2)= StH1/StH2 | Fluidity MI (g/10min.) | Punching property | Elastic Modulus in Bending (kgf/cm²) | Strength in Bending (kgf/cm²) |
|---|---|---|---|---|---|
| Example 1 | 3 | 5 | O | 18.208 | 568 |
| Example 2 | 2 | 3 | O | 20.100 | 650 |
| Comparative Example 1 | 1 | 0.5 | O | 23.000 | 670 |
| Comparative Example 2 | 1 | 5 | × | 17.000 | 500 |

As shown in Table 1, it was confirmed that fluidity, mechanical strength (bend test) and punching property were all preferable in the examples 1 and 2, but fluidity declined in the comparative example 1 and punching property, elastic modulus in bending and strength in bending declined in the comparative example 2. Accordingly, superiority of the examples 1 and 2 was confirmed.

## Claims

1. A block copolymer comprising
a polymer block [A] including two or more repeating units [1] expressed by the formula (1) below and
a polymer block [B] including one or more repeating unit [2] expressed by the formula (2) below and/or a repeating unit [3] expressed by the formula (3) below,
**characterized in that**, when a polymer block having the heaviest weight average molecular weight is a polymer block [A1] the weight average molecular weight of the polymer block [A1] is Mw (A1), a polymer block having the lightest weight average molecular weight is a polymer block [A2], and the weight average molecular weight of the polymer block [A2] is Mw (A2) in said polymer block [A], the ratio (Mw (A1) / Mw (A2)) of the Mw (A1) and Mw (A2) is 1.5 or more. 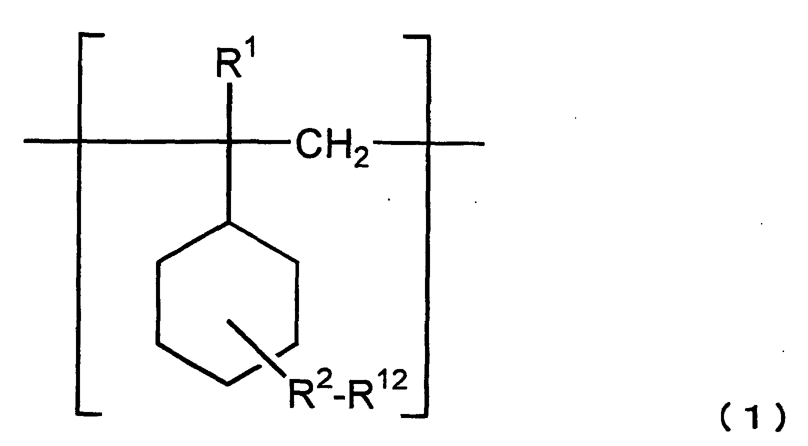 (In the formula (1), R¹ indicates a hydrogen atom or an alkyl group having a carbon number of 1 to 20, R² to R¹² indicates R², R³, R⁴, R⁵, R⁶, R⁷, R⁸, R⁹, R¹⁰, R¹¹ and R¹² respectively indicating any one of a hydrogen atom, an alkyl group having a carbon number of 1 to 20, a hydroxyl group, an alkoxy group having a carbon number of 1 to 20 and a halogen group.) 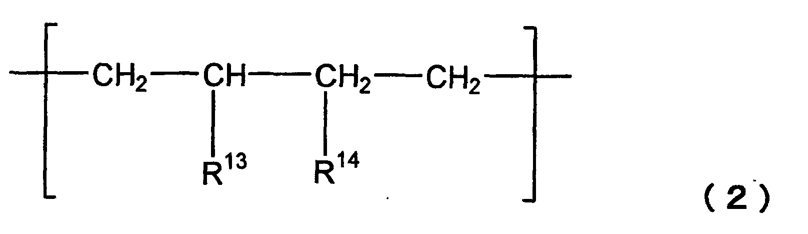 (In the formula (2), R¹³ and R¹⁴ respectively indicate any one of a hydrogen atom, an alkyl group having a carbon number of 1 to 20, a halogen group and an aryl group.) 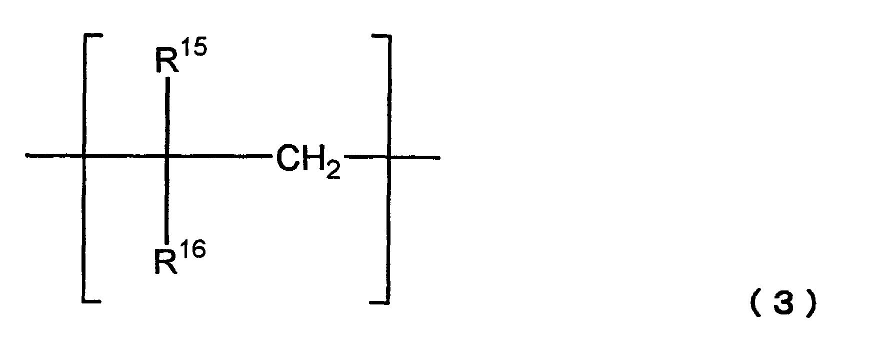 (In the formula (3), R¹⁵ and R¹⁶ respectively indicate any one of a hydrogen atom, an alkyl group having a carbon number of 1 to 20, a halogen group and an aryl group.)

2. The block copolymer as set forth in claim 1, wherein a content of the repeating unit [1] in said polymer block [A] is 90 wt% or more, and a total content of the repeating unit [2] and the repeating unit [3] in said polymer block [B] is 30 wt% or more.

3. The block copolymer as set forth in claim 1, wherein, when a weight fraction of all repeating unit composing said polymer block [A] accounting in the whole block copolymer is wA and a weight fraction of all repeating units composing said polymer block [B] accounting in the whole block copolymer is wB, the ratio (wA : wB) of the wA and wB is 30:70 to 90:10.

4. The block copolymer as set forth in claim 1, wherein weight average molecular weight of the whole block copolymer is 20,000 to 300,000.

5. The block copolymer as set forth in claim 1, wherein weight average molecular weight of the whole block copolymer is 50,000 to 150,000.

6. The block copolymer as set forth in claim 4 or 5, wherein, when a weight fraction of said repeating unit [2] accounting in the whole block copolymer is w2 and a weight fraction of said repeating unit [3] accounting in the whole block copolymer is w3, a sum (w2 + w3) of the w2 and w3 is 10 to 60 wt%.

7. The block copolymer as set forth in claim 1, wherein the ratio (Mw (A1) / Mw (A2)) of said Mw (A1) and Mw (A2) is 1.7 or more.

8. The block copolymer as set forth in claim 1, the block copolymer is a triblock copolymer wherein one of each of said polymer block [A1] and polymer block [A2] are bonded with both ends of said polymer block [B].

9. The block copolymer as set forth in claim 1, wherein weight average molecular weight of each block portion in a block copolymer is 2,000 to 300,000 in a polymer block [A] portion and 1,000 to 200,000 in a polymer block [B] portion.

10. The block copolymer as set forth in claim 1, wherein a molecular weight distribution of the whole block copolymer is 4 or less in the ratio (Mw / Mn) of weight average molecular weight and number average molecular weight.

11. A molded object obtained by molding the block copolymer as set forth in any one of claims 1 to 10.

12. The molded object as set forth in claim 11, being a light guide plate of a liquid crystal display device.

13. The molded object as set forth in claim 11, being a light diffusion plate of a liquid crystal display device.

14. A process for producing a block copolymer comprising at least three polymer blocks, comprising:
a first step for polymerizing a monomer mixture (a1) including 90 wt% or more in total of at least one kind selected from a group composed of an aromatic vinyl compound, an unsaturated alicyclic vinyl compound having unsaturated bond in the ring and a saturated alicyclic vinyl compound;
a second step for polymerizing a monomer mixture (b1) including 30 wt% or more in total of at least one kind selected from a group composed of a chain vinyl based compound and a chain conjugated diene based compound; and
a third step for polymerizing a monomer mixture (a2) including 90 wt% or more in total of at least one kind selected from a group composed of an aromatic vinyl compound, an unsaturated alicyclic vinyl compound having unsaturated bond in the ring and a saturated aclicyclic vinyl compound (note that the weight ratio of use amounts of the monomer mixture (a1) and the monomer (a2) is 1.5 or more).

15. The process for producing a block copolymer as set forth in claim 14, further including a fourth step for hydrogenating unsaturated bond of a block copolymer when the block copolymer obtained by said first to third steps has unsaturated bond (including unsaturated bond in an aromatic ring).

16. The process for producing a block copolymer as set forth in claim 14 or 15 for using a monomer mixture (a1) including 90 wt% or more in total of at least one kind of an aromatic vinyl compound selected from a group composed of styrene, α-methyl styrene, 2-methyl styrene, 3-methyl styrene and 4-methyl styrene.
